# EUROPÄISCHE PATENTSCHRIFT

(11) **EP 2 253 858 B1**
(45) Veröffentlichungstag und Bekanntmachung des Hinweises auf die Patenterteilung: **26.11.2014**
(21) Anmeldenummer: 10001915.7
(22) Anmeldetag: 24.02.2010
(51) Int. Cl.: F16B 45/02, F16B 2/00

(54) **Karabinerhaken mit wenigstens einer rutschfesten Zone**
Carabineer hook with at least one slip-proof zone
Crochet de mousqueton doté d'au moins une zone antidérapante

(30) Priorität: 14.05.2009 DE 202009006894 U
(43) Veröffentlichungstag der Anmeldung: 24.11.2010
(73) Patentinhaber: SKYLOTEC GmbH, 56567 Neuwied (DE)
(72) Erfinder: Almberger, Günther, 83714 Miesbach (DE)
(74) Vertreter: Kandlbinder, Markus Christian

(56) Entgegenhaltungen:
- DE-U1- 9 208 862
- US-A1- 2004 036 303
- US-A1- 2006 168 781
- US-A1- 2007 050 956
- US-B1- 7 181 809

## Beschreibung

Die Erfindung bezieht sich auf einen Karabinerhaken nach dem Oberbegriff des Anspruchs 1.

Karabinerhaken sind aus der Praxis bekannt und üblicherweise aus Metall, insbesondere Aluminium, gefertigt. Unter schwierigen Einsatzbedingungen, wie zum Beispiel bei ungünstiger Witterung durch Schnee, Regen, Kälte, Hitze, ist die Handhabung des bekannten Karabinerhakens erschwert, da die den Haken ergreifende Hand leicht am Material des Karabinerhakens abrutschen kann. Bei großer Hitze besteht ferner Verbrennungsgefahr, bei starkem Frost Auskühlungsgefahr sowie Gefahr des Festfrierens von Körperteilen an dem Karabinerhaken. Insbesondere ein feuchter Karabinerhaken kann in einem Bergeinsatz der Hand des Bergsteigers schnell entgleiten, was gravierende Probleme für Leib und Leben des Bergsteigers nach sich ziehen kann.

Ein Karabinerhaken mit verschleißfesten Zonen ist aus dem DokumentG 92 08 862.7 U1 bekannt. Bei dem aus dem Dokument US 2004/0036303 A1 bekannten Karabinerhaken sind einzelne Streifen auf der Außenseite des Hakenkörpers vorgesehen. Bei dem Karabinerhaken gemäß dem Dokument US 2006/0168781 A1 ist ein Teil des Hakenkörpers vollständig von einem Griff umgeben, welcher sich auch zumindest teilweise um Krümmungen des Hakenkörpers herum erstreckt.

Ein Karabinerhaken nach dem Oberbegriff des Patentanspruchs 1 ist aus dem Dokument US 2007/0050956 A1 bekannt. Bei diesem Karabinerhaken sind in der Oberfläche des Hakenkörpers Rücksprünge oder auf der Oberfläche Vorsprünge bzw. Vorwölbungen vorgesehen. Gemäß einer weiteren Ausführungsform können auch mit Rillen versehene Muster auf der Oberfläche und damit im Material des Hakenkörpers vorgesehen sein.

Der Erfindung liegt die Aufgabe zugrunde, einen Karabinerhaken der eingangs erwähnten Art zu schaffen, der auch bei ungünstiger Witterung leichter handhabbar ist.

Diese Aufgabe wird erfindungsgemäß durch einen Karabinerhaken mit den Merkmalen des Anspruchs 1 gelöst.

Vorteilhafte Weiterbildungen sind Gegenstand der Unteransprüche.

Hakenkörper, Verschlussteil und/oder Sicherung weisen auf ihrer Außenseite wenigstens eine rutschfeste Zone auf. Die rutschfeste Zone wirkt hemmend, so dass die Hand des Benutzers den Karabinerhaken leichter ergreifen und umfassen kann. Eine Bewegung entlang des betreffenden Teils des Karabinerhakens wird durch die wenigstens eine rutschfeste Zone abgebremst. Die Griffigkeit des Karabinerhakens ist deutlich verbessert. Erfindungsgemäß weisen Hakenkörper, Verschlussteil und/oder Sicherung eine Ausnehmung zum Aufnehmen der wenigstens einen rutschfesten Zone auf. Dadurch ist die wenigstens eine rutschfeste Zone sicher am betreffenden Teil des Karabinerhakens gehalten. Sie kann dadurch weniger leicht von dem betreffenden Teil des Karabinerhakens entfernt werden. Ein unabsichtliches Abziehen der wenigstens einen rutschfesten Zone von dem Karabinerhaken ist nahezu ausgeschlossen.

Gemäß einer anderen Weiterbildung der Erfindung ist die wenigstens eine rutschfeste Zone aus einem griffigen Material, vorzugsweise aus Gummi, Sandpapier, oder dergleichen, hergestellt. Insofern ist nicht der gesamte Karabinerhaken aus diesem griffigen Material zu fertigen. Es ist daher beispielsweise auch möglich, bestehende Karabinerhaken mit dem griffigen Material nachzurüsten. Auch aus Festigkeitsgründen kann der erfindungsgemäße Karabinerhaken aus Metall gefertigt sein, wobei lediglich die wenigstens eine rutschfeste Zone aus dem genannten Material zu fertigen bzw. gebildet ist.

Gemäß einer anderen Weiterbildung der Erfindung ist das Material der wenigstens einen rutschfesten Zone farblich gegenüber demjenigen des Hakenkörpers, des Verschlussteils und/oder der Sicherung abgesetzt. Dies hat den Vorteil, dass der Benutzer des erfindungsgemäßen Karabinerhakens sogleich erkennen kann, an welcher Stelle der Karabinerhaken vorteilhaft, nämlich rutschfest, ergriffen oder umfasst werden kann. Auch durch dieses Merkmal ist die Handhabbarkeit des erfindungsgemäßen Karabinerhakens verbessert. Besondere Vorteile hat die farbliche Absetzung in den Fällen, in denen ein Anfassen des Karabinerhakens an anderen als an den rutschfesten Stellen besonders gefährlich sein kann, wie zum Beispiel bei großer Hitze oder extremer Kälte.

Gemäß einer besonders bevorzugten Ausführungsform der Erfindung ist das Material der wenigstens einen rutschfesten Zone ein guter Wärmeisolator. Dadurch ist sichergestellt, dass der erfindungsgemäße Karabinerhaken auch unter Extrembedingungen, wie zum Beispiel großer Hitze oder extremem Frost, relativ gut handhabbar ist und aus den vorgenannten Gründen eine Verletzungsgefahr deutlich vermindert ist.

Vorteilhafterweise ist die wenigstens eine rutschfeste Zone auf den Hakenkörper, das Verschlussteil und/oder die Sicherung aufgebracht, vorzugsweise an- oder aufgespritzt oder an- oder aufgeklebt. Insofern kann die wenigstens eine rutschfeste Zone auch nachträglich an einem Karabinerhaken fixiert werden. Ein derartiges Aufbringen der rutschfesten Zone auf Teile des Hakens kann schnell und verhältnismäßig kostengünstig erfolgen. Es besteht eine gute Haftung zwischen der wenigstens einen rutschfesten Zone und dem betreffenden Teil des Karabinerhakens.

Gemäß einer vorteilhaften Weiterbildung ist die wenigstens eine rutschfeste Zone schalenförmig und den Hakenkörper, das Verschlussteil und/oder die Sicherung zumindest teilweise umgreifend ausgebildet und angeordnet. Dadurch ist die wenigstens eine rutschfeste Zone sehr sicher am betreffenden Teil des Karabinerhakens befestigt. Zudem ist das betreffende Teil des Karabinerhakens durch eine derart ausgebildete wenigstens eine rutschfeste Zone geschützt, so dass ein Verschleiß des betreffenden Teils des Karabinerhakens weniger leicht auftreten kann. Die schalenförmige Ausbildung der wenigstens einen rutschfesten Zone erleichtert ein Erkennen der Zone auch von der Seite her, da quasi aus drei verschiedenen Blickrichtungen die wenigstens eine rutschfeste Zone ohne weiteres erkennbar ist.

Vorteilhafterweise ist die wenigstens eine rutschfeste Zone streifenförmig ausgebildet. Eine solche Alternative zu der zuvor beschriebenen Ausführungsform ist besonders kostengünstig herstellbar und kann nahezu unabhängig von der Form des jeweiligen Karabinerhakens gefertigt werden.

Ausführungsformen des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
Fig. 1 eine schematische Vorderansicht eines Karabinerhakens gemäß einer ersten Ausführungsform;
Fig. 2 eine schematische, vereinfachte, perspektivische Ansicht eines Karabinerhakens gemäß einer zweiten Ausführungsform;
Fig. 3 eine schematische, vereinfachte, perspektivische Ansicht des Karabinerhakens gemäß Fig. 2 von einer rückseitigen Perspektive her;
Fig. 4 eine schematische Vorderansicht eines Karabinerhakens gemäß einer dritten Ausführungsform;
Fig. 5 eine schematische Seitenansicht des Karabinerhakens gemäß Fig. 4; und
Fig. 6 eine schematische, perspektivische Teilansicht einer Sicherung des Karabinerhakens gemäß den Fig. 4 und 5.

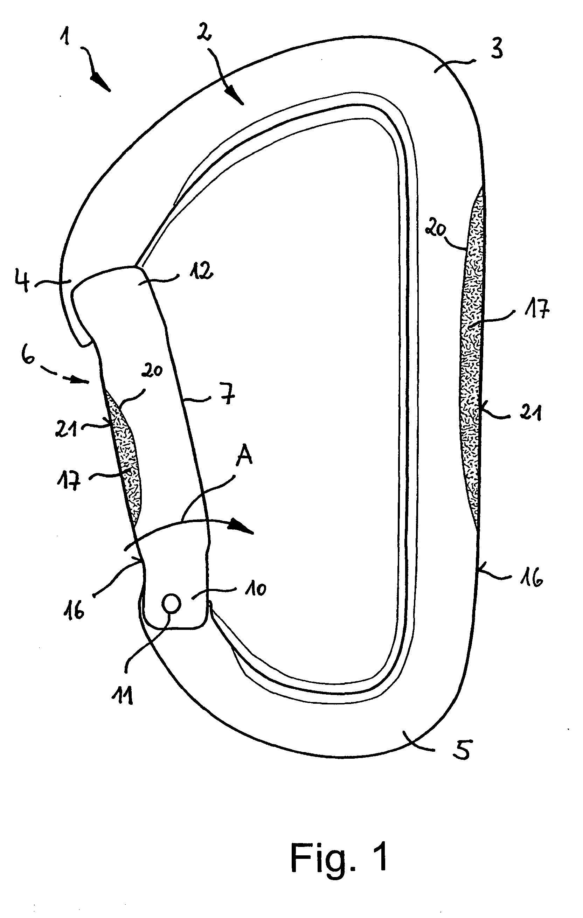

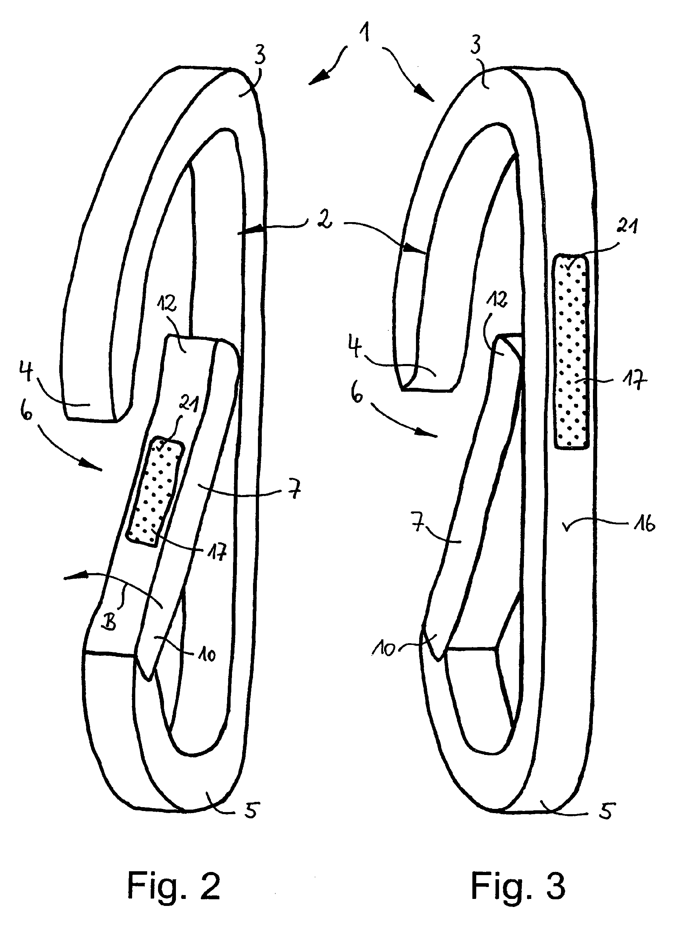

In Fig. 1 ist eine schematische Vorderansicht eines Karabinerhakens 1 in einer ersten Ausführungsform dargestellt. Der Karabinerhaken 1 hat einen Hakenkörper 2, welcher ein Kopfteil 3 mit einem freien Hakenende 4, ein Basisteil 5 und eine zwischen dem Basisteil 5 und dem freien Hakenende 4 ausgebildete Einführöffnung 6 aufweist. Letztere ist genauer in den Fig. 2 und 3 gezeigt.

Aufbau und Form des Karabinerhakens 1 können in vielfältiger Weise variieren. So sind die in den Fig. 1 bis 6 gezeigten Karabinerhaken 1 lediglich beispielhaft und in keiner Weise beschränkend dargestellt.

Der Karabinerhaken 1 hat daher den Hakenkörper 2 mit der Einführöffnung 6. Ferner hat der Hakenkörper 2 ein Verschlussteil 7, das die Einführöffnung 6 wahlweise übergreift. Diese Stellung ist in den Fig. 1 sowie 4 und 5 gezeigt. Bei den dargestellten Ausführungsformen des Karabinerhakens 1 ist das Verschlussteil 7 schwenkbar am Basisteil 5 des Hakenkörpers 2 gelagert. Das eine Ende 10 des Verschlussteils 7 nimmt die Schwenkachse 11 auf; das gegenüber liegende andere Ende, nachfolgend freies Ende 12 des Verschlussteils 7 genannt, ist in der in den Fig. 1, 4 und 5 gezeigten Schließstellung des Verschlussteils 7 mit dem freien Hakenende 4 des Hakenkörpers 2 formschlüssig verbindbar. Insofern ist das Verschlussteil 7 aus seiner in Fig. 1 gezeigten Schließstellung in seine beispielhaft in den Fig. 2 und 3 gezeigte Freigabestellung und umgekehrt überführbar. Ein Überführen des Verschlussteils 7 aus der Schließstellung gemäß Fig. 1 in die Freigabestellung gemäß Fig. 2 erfolgt also in Richtung des Pfeils A in Fig. 1. Ein üblicherweise selbsttätiges Überführen des Verschlussteils 7 aus der Freigabestellung gemäß Fig. 2 in die Schließstellung des Verschlussteils 7 gemäß Fig. 1 erfolgt in Richtung des Pfeils B in Fig. 2. Die formschlüssige Verbindung zwischen dem freien Hakenende 4 des Hakenkörpers 2 und dem anderen, freien Ende 12 des Verschlussteils 7 ist in der Darstellung der Fig. 2 und 3 der Einfachheit halber weggelassen.

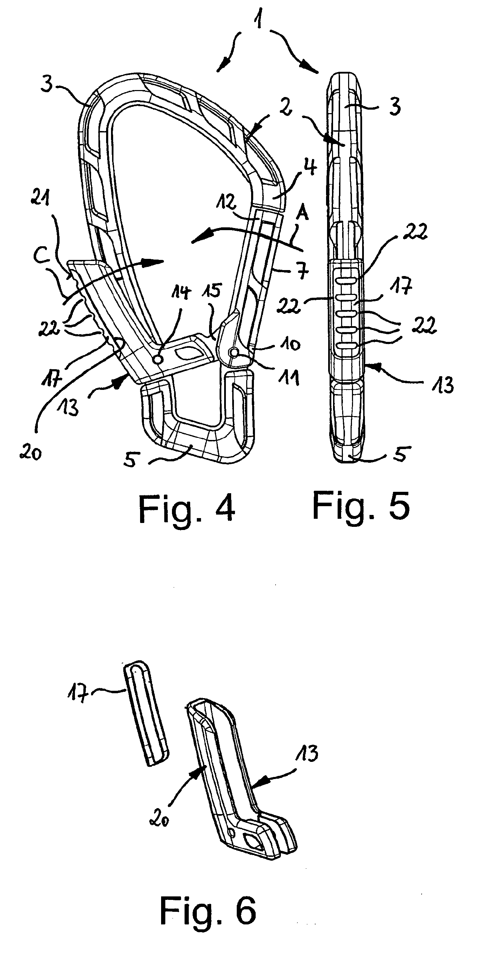

Gemäß einer genauer in den Fig. 4 und 5 gezeigten Ausführungsform der Erfindung hat der Karabinerhaken 1 ferner eine schematisch lediglich angedeutete, L-förmige Sicherung 13. Diese ist um eine Schwenkachse 14 schwenkbar am Hakenkörper 2 gelagert. Die Sicherung 13 hat einen Sperrriegel 15, welcher in Fig. 4 lediglich angedeutet ist. Dieser ermöglicht ein Überführen des Verschlussteils 7 aus der Schließstellung in die Freigabestellung nur dann, wenn die Sicherung 13 zusammen mit ihrem Sperrriegel 15 aus einer in Fig. 4 gezeigten Verriegelungsstellung in Richtung des Pfeils C in eine nicht näher gezeigte Entriegelungsstellung verschwenkt ist. In der nicht näher gezeigten Entriegelungsstellung des Sperrriegels 15 kann das Verschlussteil 7 in Fig. 4 in Richtung des Pfeils A aus seiner dargestellten Schließstellung in die beispielhaft in den Fig. 2 und 3 angedeutete Freigabestellung verschwenkt werden.

Hakenkörper 2, Verschlussteil 7 und/oder Sicherung 13 für das Verschlussteil 7 sind zumindest teilweise rutschfest ausgebildet. Dazu weisen Hakenkörper 2, Verschlussteil 7 und/oder Sicherung 13 auf ihrer Außenseite 16 wenigstens eine rutschfeste Zone 17 auf.

In der in Fig. 1 gezeigten Ausführungsform sind Hakenkörper 2 und Verschlussteil 7 jeweils mit einer rutschfesten Zone 17 versehen. Bei der in den Fig. 2 und 3 gezeigten Ausführungsform sind ebenfalls Hakenkörper 2 und Verschlussteil 7 griffig mit jeweils einer rutschfesten Zone 17 ausgebildet, wohingegen bei der in den Fig. 4 und 5 gezeigten Ausführungsform die Sicherung 13 die rutschfeste Zone 17 aufweist.

Die rutschfeste Zone 17 erstreckt sich jeweils über einen Längenabschnitt des Hakenkörpers, des Verschlussteils bzw. der Sicherung. Die wenigstens eine rutschfeste Zone 17 ist aus einem griffigen Material, beispielsweise aus Gummi, Sandpapier oder dergleichen, hergestellt. Dieses Material, aus dem die wenigstens eine rutschfeste Zone 17 gefertigt ist, ist gemäß einer bevorzugten Ausführungsform der Erfindung farblich gegenüber dem Material des Hakenkörpers 2, des Verschlussteils 7 und/oder der Sicherung 13 abgesetzt. Gemäß einer besonders bevorzugten Ausführungsform der Erfindung ist das Material der wenigsten einen rutschfesten Zone 17 ein guter Wärmeisolator, wie zum Beispiel ein Kunststoff mit einer geringen Wärmeleitfähigkeit.

Die wenigstens eine rutschfeste Zone 17 ist auf den Hakenkörper 2, das Verschlussteil 7 und/oder die Sicherung 13 aufgebracht, wobei dieses Aufbringen mittels Anspritzen, Aufspritzen, Ankleben oder Aufkleben erfolgen kann.

Gemäß der Erfindung weisen Hakenkörper, Verschlussteil und/oder Sicherung eine Ausnehmung 20 zum Aufnehmen der wenigstens einen rutschfesten Zone 17 auf. Bei der in Fig. 1 gezeigten Ausführungsform der Erfindung haben Hakenkörper 2 und Verschlussteil 7 eine solche Ausnehmung 20; bei der in den Fig. 4 und 5 gezeigten Ausführungsform der Erfindung ist eine solche an der Sicherung 13 ausgebildet.

Die Ausnehmungen 20 sind leichte Vertiefungen, welche vorzugsweise an die Form der rutschfesten Zone 17 angepasst sind, so dass die Oberseite 21 der rutschfesten Zone mit der Außenseite 16 des Hakenkörpers 2, des Verschlussteils 7 bzw. der Sicherung 13 fluchtet, wie dies in Fig. 1 gezeigt ist.

Bei der in den Fig. 4 und 5 gezeigten Ausführungsform der Erfindung hat die rutschfeste Zone 17 auf ihrer Oberseite 21 quer zur Längsachse der rutschfesten Zone 17 sich erstreckende Rillen 22, wobei auch bei dieser Ausführungsform die Oberseite 21 der rutschfesten Zone 17 mit der Außenseite 16 der Sicherung fluchtet.

Gemäß einer vereinfachten Ausführungsform der Erfindung ist die wenigstens eine rutschfeste Zone 17 streifenförmig ausgebildet, wie dies in den Fig. 2 und 3 schematisch dargestellt ist. Eine solche rutschfeste Zone kann auch als Beschichtung des die rutschfeste Zone tragenden Teils, also beispielsweise des Hakenkörpers, des Verschlussteils bzw. der Sicherung, ausgebildet sein. Die rutschfesten Zonen sind bei dieser Ausführungsform der Erfindung als gepunktete Fläche dargestellt.

Bei den in den Fig. 1, 4 bis 6 gezeigten Ausführungsformen ist die wenigstens eine rutschfeste Zone 17 schalenförmig und den Hakenkörper 2, das Verschlussteil 7 und/oder die Sicherung 13 zumindest teilweise umgreifend ausgebildet und angeordnet. Dies ist für die in den Fig. 4 und 5 gezeigte Ausführungsform genauer in der auseinander gezogenen, perspektivischen Ansicht der Fig. 6 dargestellt. In der in Fig. 6 gezeigten Darstellung der Sicherung 13 ist dessen Sperrriegel 15 der Einfachheit halber weggelassen.

Insofern ermöglicht der erfindungsgemäße Karabinerhaken einen besseren Griff, da Teile der den Karabinerhaken umgreifenden Hand des Benutzers nicht auf dem Material des Karabinerhakens, wie zum Beispiel blankem Metall, zu liegen und nicht mit diesem in Berührung kommen. Der Karabinerhaken kann eine oder mehrere rutschfeste Zonen aufweisen. Die Anordnung der rutschfesten Zonen ist nicht auf die in den Fig. 1 bis 6 gezeigte Anordnung beschränkt. So ist es möglich, am Hakenkörper 2 mehrere rutschfeste Zonen vorzusehen oder die gesamte Außenfläche des Hakenkörpers als rutschfeste Zone auszubilden.

Somit ist ein Karabinerhaken geschaffen, der in sämtlichen praktischen Einsatzfällen und somit auch bei ungünstiger Witterung leichter und sicherer handhabbar ist.

## Patentansprüche

1. Karabinerhaken,
mit einem eine Einführöffnung (6) aufweisenden Hakenkörper (2) und
mit einem die Einführöffnung (6) des Hakenkörpers (2) wahlweise übergreifenden Verschlussteil (7),
wobei Hakenkörper (2), Verschlussteil (7) und/oder eine Sicherung (13) für das Verschlussteil (7) auf ihrer Außenseite (16) wenigstens eine rutschfeste Zone (17) aufweisen,
**dadurch gekennzeichnet, dass**
Hakenkörper (2), Verschlussteil (7) und/oder Sicherung (13) eine Ausnehmung (20) zum Aufnehmen der wenigstens einen rutschfesten Zone (17) aufweisen.

2. Karabinerhaken nach Anspruch 1, **dadurch gekennzeichnet, dass** die wenigstens eine rutschfeste Zone (17) aus einem griffigen Material, vorzugsweise aus Gummi, Sandpapier oder dergleichen, hergestellt ist.

3. Karabinerhaken nach Anspruch 2, **dadurch gekennzeichnet, dass** das Material der wenigstens einen rutschfesten Zone (17) farblich gegenüber demjenigen des Hakenkörpers (2), des Verschlussteils (7) und/oder der Sicherung (13) abgesetzt ist.

4. Karabinerhaken nach Anspruch 2 oder 3, **dadurch gekennzeichnet, dass** das Material der wenigstens einen rutschfesten Zone (17) ein guter Wärmeisolator ist.

5. Karabinerhaken nach einem der Ansprüche 1 bis 4, **dadurch gekennzeichnet, dass** die wenigstens eine rutschfeste Zone (17) auf den Hakenkörper (2), das Verschlussteil (7) und/oder die Sicherung (13) aufgebracht, vorzugsweise an- oder aufgespritzt oder an- oder aufgeklebt, ist.

6. Karabinerhaken nach einem der Ansprüche 1 bis 5, **dadurch gekennzeichnet, dass** die wenigstens eine rutschfeste Zone (17) schalenförmig und den Hakenkörper (2), das Verschlussteil (7) und/oder die Sicherung (13) zumindest teilweise umgreifend ausgebildet und angeordnet ist.

7. Karabinerhaken nach einem der Ansprüche 1 bis 5, **dadurch gekennzeichnet, dass** die wenigstens eine rutschfeste Zone (17) streifenförmig ausgebildet ist.

## Claims

1. Carabiner hook having a hook body (2) with an insertion opening (6) and having a locking part (7) optionally overlapping the insertion opening (6) of the hook body (2), wherein the hook body (2), the locking part (7) and/or a securing part (13) for the locking part (7) have at least one slip-proof zone (17) on the outside (16) thereof, **characterised in that** the hook body (2), the locking part (7) and/or the securing part (13) have a recess (20) for accommodating the at least one slip-proof zone (17).

2. Carabiner hook according to claim 1, **characterised in that** the at least one slip-proof zone (17) is made of a non-slip material, preferably rubber, sandpaper or the like.

3. Carabiner hook according to claim 2, **characterised in that** the material of the at least one slip-proof zone (17) is distinguished by colour relative to the material of the hook body (2), the locking part (7) and/or the securing part (13).

4. Carabiner hook according to claim 2 or 3, **characterised in that** the material of the at least one slip-proof zone (17) is a good heat insulator.

5. Carabiner hook according to one of the claims 1 to 4, **characterised in that** the at least one slip-proof zone (17) is applied to the hook body (2), the locking part (7) and/or the securing part (13), preferably injection moulded thereat or thereon or glued thereat or thereon.

6. Carabiner hook according to one of the claims 1 to 5, **characterised in that** the at least one slip-proof zone (17) is configured and arranged dish-shaped and at least partially encompassing the hook body (2), the locking part (7) and/or the securing part (13).

7. Carabiner hook according to one of the claims 1 to 5, **characterised in that** the at least one slip-proof zone (17) is configured striped.

## Revendications

1. Crochet de mousqueton,
comprenant un corps de crochet (2) présentant une ouverture d'introduction (6), et
comprenant une pièce de fermeture (7) qui coiffe sélectivement l'ouverture d'introduction (6) du corps de crochet (2),
dans lequel le corps de crochet (2), la pièce de fermeture (7) et/ou un blocage (13) pour la pièce de fermeture (7) présente sur leur face extérieure (16) au moins une zone antidérapante (17),
**caractérisé en ce que**
le corps de crochet (2), la pièce de fermeture (7) et/ou le blocage (13) comporte un évidement (20) pour recevoir ladite au moins une zone antidérapante (17).

2. Crochet de mousqueton selon la revendication 1, **caractérisé en ce que** ladite au moins une zone antidérapante (17) est réalisée en un matériau présentant une bonne adhérence, de préférence en caoutchouc, en papier de verre ou similaire.

3. Crochet de mousqueton selon la revendication 2, **caractérisé en ce que** le matériau de ladite au moins une zone antidérapante (17) se distingue en couleurs par rapport à celle du corps de crochet (2), de ladite pièce de fermeture (7) et/ou du blocage (13).

4. Crochet de mousqueton selon la revendication 2 ou 3, **caractérisé en ce que** le matériau de ladite au moins une zone antidérapante (17) est un bon isolateur thermique.

5. Crochet de mousqueton selon l'une des revendications 1 à 4, **caractérisé en ce que** ladite au moins une zone antidérapante (17) est rapportée sur le corps de crochet (2), sur la pièce de fermeture (7) et/ou sur le blocage (13), de préférence projetée contre ou par-dessus, ou encore collée contre ou par-dessus.

6. Crochet de mousqueton selon l'une des revendications 1 à 5, **caractérisé en ce que** ladite au moins une zone antidérapante (17) est réalisée en forme de coque, et le corps de crochet (2), la pièce de fermeture (7) et/ou le blocage (13) sont réalisés et agencés au moins partiellement sur le pourtour.

7. Crochet de mousqueton selon l'une des revendications 1 à 5, **caractérisé en ce que** ladite au moins une zone antidérapante (17) est réalisée sous forme de bande.
